# EUROPÄISCHE PATENTSCHRIFT

(11) **EP 0 809 215 B1**
(45) Veröffentlichungstag und Bekanntmachung des Hinweises auf die Patenterteilung: **23.10.2002**
(21) Anmeldenummer: 97250136.5
(22) Anmeldetag: 22.04.1997
(51) Int. Cl.: G07B 17/00

(54) **Auswechselbares Portorechnermodul und Verfahren zur Datenübertragung**
Interchangeable postage computer module and method for data transmission
Module calculateur d'affranchissement interchangeable et procédé pour transmission de données

(30) Priorität: 21.05.1996 DE 19622304
(43) Veröffentlichungstag der Anmeldung: 26.11.1997
(73) Patentinhaber: Francotyp-Postalia AG & Co. KG, 16547 Birkenwerder (DE)
(72) Erfinder: Reisinger, Frank, 16515 Oranienburg (DE); Turner, Olaf, 12349 Berlin (DE)

(56) Entgegenhaltungen:
- US-A- 4 325 440
- US-A- 4 718 506
- US-A- 4 900 904
- US-A- 5 117 364
- US-A- 5 262 939

## Beschreibung

Die Erfindung betrifft ein auswechselbares Portorechnermodul gemäß der im Anspruch 1 angegebenen Art und ein entsprechendes Verfahren zur Datenübertragung zwischen Portorechnermodul und Basisgerät, gemäß der im Oberbegriff des Anspruchs 10 angegebenen Art.

Anwendungsgebiet für ein solches Portorechnermodul sind insbesondere Portowaagen und Frankiermaschinen oder ähnliche bzw. abrechnende Basisgeräte.

Es sind bereits mehrere Verfahren bekannt, Portoberechnungstabellen in portoberechnenden Waagen austauschbar oder nachladbar zu machen. So wird in US 4 506 330 eine in einem PROM auf einer abnehmbaren Leiterplatte gespeicherte Portotabelle mit Schaltern zur Adressierungsumschaltung beschrieben.

In US 3 635 297 ist eine ähnliche in ROM's abgelegte, auswechselbare Portospeichertabelle beschrieben. Diese Tabelle liegt an einem parallelen Bus, um den schnellen Zugriff eines Prozessors auf diese zu ermöglichen.

Die US 4 325 440 beschreibt ein Verfahren zum Frankieren von Poststücken und ein Multiprozessorsystem, das einen Systemprozessor für die Portoberechnung und weitere Subsystemprozessoren enthält, wobei ein Subsystemprozessor mit einer Waage, wobei ein Subsystemprozessor mit einem Userinterface und wobei ein für einen Portodruck bestimmter Subsystemprozessor mit einem Portodrucker verbunden ist. Das Multiprozessorsystem ist nicht flexibel an anderen Geräten einsetzbar.

Die US 4 718 506 beschreibt einen Portorechner für eine Portowaage. Der Portorechner ist mit einem auswechselbarem Portospeicher ausgerüstet und ist ebenfalls nicht flexibel in Kombination mit anderen bzw. an anderen Geräten einsetzbar.

Die US 5 262 939 beschreibt eine Portowaage mit Multicarrierfunktion. Aber auch hier ist der Portorechner integrierter Bestandteil eines kompletten Wiege- und Rechensystems und nicht flexibel in Kombination mit anderen bzw. an anderen Geräten einsetzbar.

Aus der US 5.117.364 ist ein Postbefördererverwaltungssystem mit einer Waage für zu versendende Pakete, einem angeschlossenem Computer und Eingabemitteln bekannt, wobei der Computer einen auswechselbaren Speicher zum Speichern einer Datenbank für Tariftabellen der einzelnen Postbeförderer mit Portogebührendaten enthält. Der Ablauf bei der Bestimmung des kostengünstigsten Beförderers wird nur durch Bedienereingaben unterbrochen. Das System kann jedoch auf neu hinzukommende Portoberechnungsstrukturen einiger Postbeförderer nicht flexibel reagieren.

Das EP 0 099 666 B1 beschreibt ebenfalls ein System, das mit einem festen Prozessor und austauschbaren Gebührentabellenspeichern arbeitet.

Derartige Lösungen mit herkömmlicher Portostruktur sind nur flexibel bezüglich der Tabellengröße. Im Falle von Tariferweiterungen bzw. -änderungen wird einfach der Festwertspeicher mit der Portotariftabelle gegen einen solchen mit mehr Speicherkapazität ausgetauscht. Von Nachteil ist aber, daß derartige austauschbare Festwertspeicher von dem Prozesser im Basisgerät nach einem fest gespeicherten Programm ausgewertet werden. Damit sind solche Lösungen auf herkömmliche Portostrukturelemente des Programms beschränkt und gegenüber neuen Portostrukturelementen unflexibel. Ein weiterer Nachteil beim Zugreifen auf die Festwertspeicher mit einer umfangreichen Portotariftabelle besteht darin, daß eine hinreichende Schnelligkeit beim Zugreifen den Einsatz einer teueren Schnittstelle erfordert, welche eine Vielzahl an PINs aufweisen muß.

Ab einer mittleren bis höheren Anzahl an zu versendenden Briefen oder anderen Postgütern werden in üblicher Weise Frankiermaschinen zum Frankieren der Postgüter benutzt. Eine Frankiermaschine ist mit einer Steuereinheit, Speichermitteln, einem Eingabemittel, einem MODEM oder anderen Daten-Empfangsmitteln, einem Ein/Ausgabe-Steuermittel, einem Anzeigemittel und einem Drucker ausgerüstet, wobei in den Speichermitteln nichtflüchtig ein vorausbezahlter Guthabenwert gespeichert vorliegt. In der Regel obliegt der Steuereinheit CPU auch die Verwaltung der geldwerten Daten und die Frankiermaschine ist mit geeigneten Sicherheitsmitteln versehen. Nach Abzug des ermittelten Portowertes vom vorgenannten Guthabenwert druckt ein feststehender Druckkopf spaltenweise den Frankierabdruck bei gleichzeitigem Brieftransport. Dabei wird eine Druckbreite von ca. 1 Zoll erreicht.

Die US 4 802 218 beschreibt primär Verfahren zur chipkartenbasierten Abrechnung eines Frankiersystems, enthält jedoch auch den Vorschlag einer weiteren Chipkarte, auf der die aktuelle Portotariftabelle gepeichert ist. Diese Posttariftabelle wird vom Programm des Frankiersystems zur Ermittlung des Portowerts benutzt. Als Nadelöhr für eine Datenübertragung erweist sich auch hier die serielle Schnittstelle zur Chipkarte mit der Portotariftabelle.

Zur Vermeidung dieses Nachteils sind Verfahren geeignet, die nicht erst unmittelbar während der Portoberechnung auf den externen Festwertspeicher zugreifen, sondern vorab die aktuelle Portotariftabelle in einen internen Speicherbereich kopieren bzw. laden. Ein Ladestecker für ein solches Verfahren ist aus der EP 0 560 717 A2 für eine Frankiermaschine bekannt geworden, welche einen internen Portorechner einschließt. Der in den internen Portorechner eingebaute Tarifspeicher kann nachträglich durch den Benutzer aktualisiert werden, indem außen ein Ladestecker mit der neuen Portotabelle angesteckt wird, dessen Inhalt nach Betätigung von Befehlseingabemitteln in den rechnerinternen Speicher kopiert wird. Der Benutzer muß selbst für das Laden, d.h. für die Aktualität der intern gespeicherten Tabellendaten sorgen. Eine Flexibilität gegenüber zukünftiger Veränderungen ist nur in dem Maße bezüglich der Tabellengröße gegeben inwieweit vorher interner Speicherplatz dafür eingeplant wurde.

Die Portogebührentabellen werden von Zeit zu Zeit vom Postbeförderer aktualisiert. In der Regel werden dabei die Tarife für bestimmte Beförderungsleistungen erhöht. Durch einen Ladestecker bzw. Austausch von Festwertspeichern alle zukünftig möglichen Änderungen zu berücksichtigen, wird zukünftig jedoch immer schwieriger, denn es besteht keine Flexibilität bezüglich neuer Portoberechnungsstrukturen.

Solange Frankiermaschinen nur zur Abrechnung mit einem Beförderer (bislang die nationale Postagentur) vorgesehen sind, ist der Verfall der alten Portogebührentabellen und die Notwendigkeit des Nachladens einer neuen Tabelle ein für den Hersteller und den Kunden noch zu überschauender Vorgang, insbesondere wenn die Portostrukturen dabei erhalten bleiben. Dann kann auch eine Datenzentrale die Übermittlung einer aktuellen Tabelle veranlassen, wie aus der DE 28 03 982 bekannt geworden ist. Die Portoberechnungsgeräte aller Kunden müssen aber mit einem Modem oder vergleichbarem Übertragungsmittels ausgestattet sein und für die Übermittlung der Aktualisierungsdaten ständig empfangsbereit gehalten werden. Strukturänderungen in der Berechnung können nicht berücksichtigt werden. Ein solches Verfahren kann auch nicht individuell für jeden Kunden einen speziellen Satz an geeigneten Beförderern in sein Portoberechnungsgerät laden.

Ein anderes Verfahren ist in der US 5 490 077 für eine Frankiermaschine ausführlich beschrieben worden, welche automatisch für die Aktualität der intern gespeicherten Tabellendaten nach jedem Einschalten der Frankiermaschine durch Laden aus einem externen Speicher in einem Übertragungsmittel sorgt. Dabei erfordert jedes Übertragungsmittel spezifische Empfangs- bzw. Eingabemittel. Bei einer Mobilfunkvariante sind Mobilfunk-Empfangs/Sendemittel, bei einer ISDN-Variante ein Modem und bei einer Chipkarten-Variante eine Chipkartenleseeinheit erforderlich.

Bei allen diesen Lade- oder Kopierverfahren ist zwar keine Schnelligkeit beim Datenzugriff während des Ladens mehr nötig, jedoch sind solche Lösungen immer noch zu unflexibel bezüglich einer Tarifänderung, welche eine wesentlich vergrößerte Tariftabelle zur Folge hat und gestatten keine Anpassung an eine neue Portoberechnungsstruktur.

Eine der noch verbleibenden Verbesserungen der Frankiermaschinen liegt in der Schaffung von Flexibilität hinsichtlich der Abrechnung gegenüber verschiedenen Beförderern. Dabei ist eine kostengünstige Dienstleistung aus jeweilig gültigen Tarifstrukturen verschiedener Beförderer auszuwählen. Ist aber die Frankiermaschine zur Abrechnung gegenüber einer Vielzahl verschiedener Beförderer eingerichtet, muß auch eine spezielle Lösung geschaffen werden, damit stets die für den ausgewählten Beförderer gültige Portogebührentabelle zur Verfügung steht. Voraussetzung dafür ist die Einplanung von genügend Speicherplatz für die unterschiedlichen befördererbezogenen Tarife. Nun ist aber denkbar, daß neu am Markt auftretende regional, national oder international agierende private Beförderer völlig vom bisherigen abweichende Portostrukturen haben, die sich nicht derart in den Tabellen darstellen lassen, daß das unveränderte alte Interpretationsprogramm hieraus den Portowert ermitteln könnte. Grundsätzlich neue Portoberechnungsstrukturen der Tarife könnten nationale Postagenturen als auch private Beförderer festlegen. Bei der Aktualisierung müßte also auch das Interpretationsprogramm ausgetauscht werden, was aber speziell bei Frankiermaschinen auf Sicherheitsbedenken stößt, denn ein vom Frankiermaschinenrechner ausgeführter Programmcode muß stets nach speziellen Sicherheitskriterien bezüglich der Datenmanipulationssicherheit der in der Frankiermaschine gespeicherten geldwerten Daten ausgebildet werden. Die eingespeisten Programmteile dürfen im Sinne die Datenmanipulationssicherheit nicht verringern. Aus der Sicht der Beförderer stellt jede Möglichkeit des Benutzers von außen einen Programmcode in die Frankiermaschine nachzuladen ein unakzeptables Sicherheitsrisiko dar, weil nicht ausgeschlossen werden kann, daß auf diesem Weg gezielt Software zum Zwecke der Manipulation der geldwerten Daten in Fälschungsabsicht eingeschleust wird. Selbst wenn aber, vom o.g. Verfahren abweichend, ein Servicetechniker die neuen Programmteile (Installationsprogramm) installieren soll, ergeben sich außer den Kosten auch grundsätzliche Schwierigkeiten für ein solches Installationsverfahren. Der zur Abbildung zukünftiger Portoberechnungsstrukturen erforderliche Speicherplatzbedarf im internen Speicherbereich ist nämlich schwer vorauszuplanen, wodurch das o.g. Installationsverfahren unter Umständen ebenfalls scheitern kann.

Der Erfindung liegt die Aufgabe zugrunde, die Nachteile des Standes der Technik zu beseitigen und unter Einsatz einer Schnittstelle sowie bei einer geringen zu übertragenden Datenmenge in einer Anordnung die Portogebühren zu ermitteln.

Die Lösung soll eine leichte Modifizierung auf die beförderer- und/oder länderspezifische Portostruktur gestatten, ohne die Basismaschine zu öffnen oder einen Servicetechniker beauftragen zu müssen. Insbesondere soll bei eventuell später auftretenden neuartigen Portoberechnungsstrukturen die Portoberechnungsart leicht umstellbar oder erweiterbar sein.

Zusätzlich ist ein flexibleres Verfahren zur Datenübertragung für die Verarbeitung zur Portoberechnung so weiter zu entwickeln, daß Geräte, wie beispielsweise Portowaagen bzw. Frankiermaschinen gegebenenfalls in Verbindung mit Waagen, auf zukünftige Dienstleistungen diverser privater Postbeförderer erweiterbar sind, so daß der Portowert nach aktuell gültigen Tarifen berechnet werden kann.

Diese Aufgaben werden mit den Merkmalen der Ansprüche 1 bzw. 10 gelöst.

Eine gemeinsame Ursache der o.g. Nachteile liegt darin, daß das Problem möglicher späterer Posttarifänderungen bisher durch den Austausch beziehungsweise Nachladen einer Gebührentabelle gelöst wurde. Die eigentliche Gebührenberechnung erfolgt durch das bestehende Programm des in das entsprechende Basisgerät (Frankiermaschine beziehungsweise Portowaage) integrierten Portorechners durch Auswertung der nachgeladenen oder äußerlich angesteckten Portotabelle. Da das auswertende Programm sowie der Rechner von außen nicht veränderbar sind, ist nur eine vorbestimmte Klasse von Portotarifänderungen nachladbar. Falls sich die Struktur auf unvorhergesehene Weise grundlegend ändert, kann auch der Austausch des festen Interpretationsprogramms erforderlich werden, so daß ein Technikereinsatz bei allen installierten Systemen erforderlich wird. Hierbei sind unter Umständen umfangreiche Änderungen erforderlich, da durch die Hardwareausstattung des bestehenden Rechners für alle Zeit die Nachladbarkeit der Portotabellen begrenzt ist, insbesondere bezüglich des Speicherplatzes zur Aufnahme der Gebührentabelle bzw. der Adressierbarkeit sowie der Rechengeschwindigkeit. Es wäre leicht denkbar, daß künftige Portotabellen infolge ihrer Komplexität aus diesen Gründen vom alten Rechner nicht mehr angemessen bearbeitet werden können. Dies gilt im verstärkten Maße, wenn zukünftig die Tarife mehrerer in den Markt eintretender Beförderer bei der Portoberechnung berücksichtigt werden sollen. Ein Überdimensionieren der Hardware einer Frankiermaschine oder einer Portowaage auf ein hinreichend zukunftssicheres Niveau würde jedoch einen Kompromiß darstellen, der bereits zum Zeitpunkt der Geräteproduktion Geld kostet, jedoch nur von wenigen Benutzern oder möglicherweise nie benötigt wird.

Die Erfindung basiert auf dem Gedanken, nicht nur Portotabellen vom Kunden austauschbar zu gestalten, sondern dabei auch den Portorechner durch den Kunden gleich mit auszutauschen zu lassen.

Die Ausbildung des Portogebühren- und Berechnungsmoduls erfolgt erfindungsgemäß als eine auf eine Standardschnittstelle aufsteckbare bzw. in das Innere eines Basisgerätes an einem dem Kunden zugänglichen Ort einsetzbare austauschbare Einrichtung zur Portoberechnung, welche nachfolgend austauschbares Portorechnermodul genannt wird. Dieses austauschbare Portorechnermodul enthält wesentliche Teile eines kompletten Portorechners, insbesondere eine zentrale Verarbeitungseinheit (CPU) und einen Speicher für Portoinformationen sowie ein Gehäuse.

Es ist zweckmäßig, den Portorechnermodul in einem Gehäuse nach Art eines Dongles unterzubringen.

Die Schnittstelle wird als standardisierte serielle Schnittstelle ausgeführt. Es ist vorgesehen, das Portorechnermodul über den Schnittstellenstecker mit mindestens einer Betriebsspannung zu versorgen.

Im Falle einer Portoberechnungsstrukturänderung kann ein solches Portorechnermodul, wie ein Dongle, als ganzes durch den Benutzer ausgetauscht werden. Als Basisgerät eignen sich Frankiermaschine oder Portoaage.

Das Portorechnermodul liefert Daten mindestens eines Beförderers zur Anzeigeänderung im Basisgerät aufgrund von Eingaben betreff gestellter Dienstleistungsanforderungen an einen Beförderer und zur Verarbeitung der gelieferten Daten im Basisgerät.

Das Portorechnermodul erhält vom Rechner der Frankiermaschine und/oder der Portowaage über die Schnittstelle Informationen über Gewicht und Zusatzangaben des Benutzers zum Versand, insbesondere über gedrückte Tasten. Aus diesen Informationen berechnet der austauschbare Portorechner den Portowert und sendet diesen in Verbindung mit anderen Daten über eine Schnittstelle an den anfordernden Rechner im Basisgerät zurück.

Das auswechselbare Portorechnermodul kann als Einchip-Rechner oder auch als Verarbeitungseinheit CPU mit getrennten Speicherelementen ausgeführt sein.

Vorteilhaft ist, daß das Programm zur Portoermittlung sich auf Portotabellen der herkömmlichen Art stützen kann, aber nicht darauf beschränkt ist, wenn das im Portorechenmodul befindliche Programm vom Kunden ebenfalls mit ausgetauscht wird. Hierdurch sind Portostrukturelemente, die in Portotabellen nur schwer abbildbar sind, in einfacher Weise durch entsprechenden Programmablauf berechenbar, wodurch sich Vorteile bezüglich der Speicherbedarfs sowie der Verarbeitungsgeschwindigkeit ergeben. Das ist insbesondere vorteilhaft, wenn ein neuer Beförderer eine Dienstleistung anbieten, wofür Gebühren nach einer abweichenden bzw. anderen Art und Weise ermittelt werden. Weiterhin ist das im Falle von komplexen Portoberechnungsänderungen der angestammten Postbeförderer vorteilhaft. Vorteile entstehen auch bei der Produktion von Ländervarianten. Das Betriebsprogramm in der Basismaschine muß nicht angetastet werden, wenn eine andere länderspezifische Berechnungsstruktur gewünscht wird.

Das Protokoll wird zweckmäßig so vereinbart, daß der Einsatz des beschriebenen auswechselbaren Portorechners gleichermaßen als Zusatzgerät zu einer Waage als auch als Zusatzgerät zu einer Frankiermaschine möglich ist. Hierdurch läßt sich eine ganze Gerätefamilie optional mit der Portoberechnungsfunktion ausrüsten.

Es ist vorgesehen, auch einige der empfangenen Werte zurück zu übermitteln. Diese Werte können im Einzelfall vom Portorechnermodul verändert sein, um dem anfordernden Gerät und damit dem Benutzer zu signalisieren, daß die ursprünglich gewählte Versendungsform aus Gründen der Tarifstruktur unzulässig oder unzweckmäßig ist. Es ist möglich dem Benutzer zugleich eine zweckmäßige mögliche Versendungsform zu signalisieren.

Es ist vorgesehen, im Protokoll einige sonstige Befehle zu vereinbaren, beispielsweise zur Abfrage der Versionsnummer des auswechselbaren Portorechnermoduls oder um dem auswechselbaren Portorechnermodul Informationen über das anfordernde System zu übertragen, damit unterschiedliche Programmabläufe gesteuert werden können, falls das auswechselbare Portorechnermodul an unterschiedlichen Systemen betrieben werden soll.

Es ist eine Variante vorgesehen, bei der das Gehäuse des Portorechnermoduls mit zwei Schnittstellen ausgestattet ist, um den Rechner in die serielle Kabelverbindung zwischen Frankiermaschine und einer das Gewicht ermittelnden Waage einfügen zu können. Hierbei sind verschiedene Ausführungsformen für den Signalfluß möglich: Der Signalfluß kann über die zweite mit der Waage gekoppelten Schnittstelle so gestaltet werden, daß vom Portorechnermodul die Waageninformation direkt zur Portoermittlung herangezogen wird. Mit der ersten Schnittstelle, mit welcher das Portorechnermodul an die Frankiermaschine angeschlossen ist, wird lediglich der ermittelte Portowert übertragen. Andererseits ist auch denkbar, daß die Waageinformation zunächst über die Schnittstellen des Portorechnermoduls an die Frankiermaschine weitergeleitet wird, und von dort zu einem anderen Zeitpunkt als Block mit der Angabe über die Benutzereingaben zur Portoberechnung wieder an das Portorechnermodul geht. Drittens ist denkbar, daß der Portorechner durch eine zusätzliche Hardware die ansonsten durchgängige Verbindung zwischen Frankiermaschine und Waage unterbricht, wenn er aus dem Datenstrom erkennt, daß der aktuelle Informationsblock für ihn bestimmt ist, beziehungsweise dann unterbricht, wenn durch den Portorechner selbst eine Information an die Frankiermaschine gesendet werden soll.

Es ist denkbar, daß der Portorechner den auf der einen Schnittstelle gelesenen Informationsfluß der Waage konvertiert und erst dann an die Frankiermaschine weitersendet. Hierdurch ergibt sich der besondere Vorteil, nachträglich Waagen mit anderem Protokoll an bestehende Anlagen anschließen zu können, ohne in die Frankiermaschine eingreifen zu müssen, etwa um das Waagen-Kommunikationsprogramm auszutauschen.

Es ist zweckmäßig, daß die Frankiermaschine selbsttätig die Anwesenheit des auswechselbaren Portorechners erkennt, um dem Kunden entsprechend die Berechnungsfunktion anzubieten oder den gewünschten Portowert vom Kunden abzufragen.

Es ist vorgesehen, über die serielle Schnittstelle das auswechselbare Portorechnermodul gegebenenfalls zu programmieren bzw. Daten zu laden.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1,: Ansicht des steckbaren Portorechnermoduls,
- Figur 2,: Innenansicht des steckbaren Portorechnermoduls nach einer ersten Variante,
- Figur 3,: Innenansicht des steckbaren Portorechnermoduls nach einer zweiten Variante,
- Figur 4,: steckbares Portorechnermodul für eine Portowaage,
- Figur 5,: steckbares Portorechnermodul für eine Frankiermaschine, nach einer ersten Schnittstellenverschaltungsvariante,
- Figur 6,: steckbares Portorechnermodul für eine Frankiermaschine, nach einer zweiten Schnittstellenverschaltungsvariante,
- Figur 7a,: Flußdiagramm für den Datenaustausch eines steckbaren Portorechner moduls zur Ermittlung des Portowertes für eine Portowaage oder eine Frankiermaschine,
- Figur 7b,: Flußdiagramm für den Datenaustausch eines steckbaren Portorechnermoduls nach einer Subvariante,
- Figur 8,: Datensatz für den Informationsfluß von der Frankiermaschine zum auswechselbaren Portorechnermodul,
- Figur 9,: Datensatz für den Informationsfluß vom externen Portorechnermodul zur Frankiermaschine,
- Figur 10,: zusätzlicher Datensatz für den Informationsfluß von der Frankiermaschine zum auswechselbaren Portorechnermodul,
- Figur 11,: zusätzlicher Datensatz für den Informationsfluß vom auswechselbaren Portorechnermodul zur Frankiermaschine.

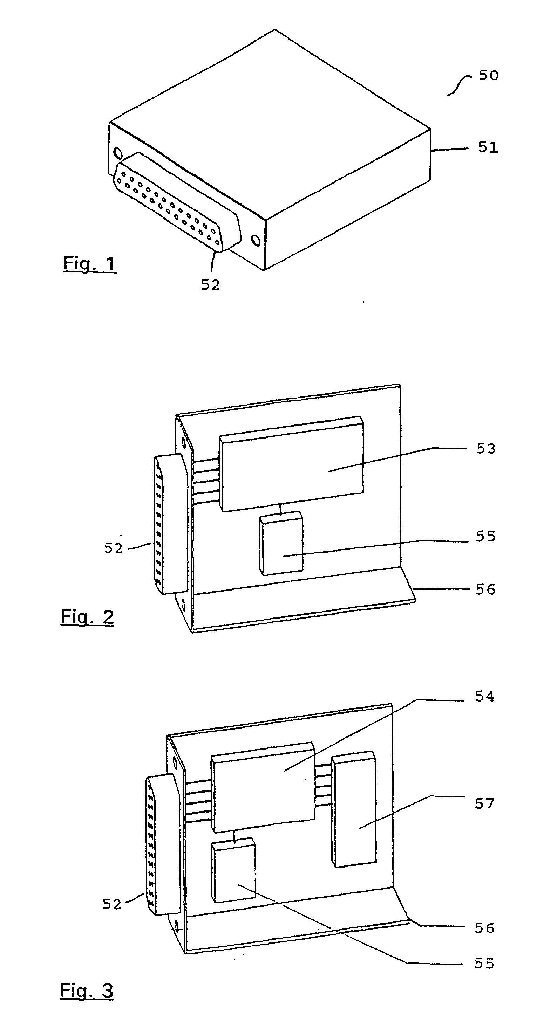

In der Figur 1 ist eine Ansicht des steckbaren Portogebühren- und Berechnungsmoduls 50 mit einem Sicherheitsgehäuse 51 dargestellt, welches eine serielle Schnittstelle, beispielsweise eine V24-Schnittstelle 52 aufweist.

Die in der Figur 2 gezeigte Innenansicht, vermittelt einen Eindruck von einem kostengünstigen Aufbau mit einem Single-Chip-Rechner 53 auf einer Platine 56. Zusätzlich kann der Single-Chip-Rechner 53 mit einem Zusatzbaustein 55 zur Takterzeugung verbunden sein.

Um einen unautorisierten Nachbau vorzubeugen, kann der Portorechner des auswechselbaren Portorechnermoduls auch als OTP-Prozessor (ONE TIME PROGRAMMABLE) ausgebildet sein. Ein solcher OTP-Prozessor weist einen internen flüchtigen Arbeitsspeicher iRAM und interne nichtflüchtige Speicher iROM bzw. iEPROM auf, wobei letzterer während der Herstellung oder im Anschluß daran entsprechend für den Kunden programmiert wird.

Alle entscheidenden Programmteile sind im internen Programmspeicher iROM gespeichert. Nach der Programmierung des OTP kann das Programm, einschließlich das Schnittstellenprogramm, nicht mehr ausgelesen werden.

Als OTP kann beispielsweise ein 8051-Prozessor mit einem 16 kByte On-Chip-EPROM als internen Programmspeicher eingesetzt werden.

Ein anderer OTP-Typ weist einen zusätzlichen beschreibbaren internen nichtflüchtigen Speicher E²PROM auf, in den über die Schnittstelle befördererspezifische Daten, (z.B. Tariftabellendaten) geladen werden können.

Dagegen zeigt die in der Figur 3 gezeigte Innenansicht eine in der Herstellung etwas aufwendigere Variante mit Verarbeitungseinheit (CPU) 54, nichtflüchtigem Speicher 57 und einem Zusatzbaustein 55. Letzterer kann einen Takterzeugerbaustein einschließen und ggf. weitere Baugruppen umfassen, die zum Betrieb der seriellen Schnittstelle (V24-Schnittstelle) erforderlich sind.

Als nichtflüchtiger Speicher 57 kann ein PROM, EPROM, E²PROM, FLASH-MEMORY oder batteriegestützter CMOS-RAM verwendet werden.

Die interne Verarbeitungseinheit CPU des auswechselbaren Portorechnermoduls ist durch ein im nichtflüchtigen Speicher gespeichertes Berechnungsprogramm programmiert zum:
- Liefern von Daten mindestens eines Beförderers vom auswechselbaren Portorechnermodul zur Anzeigeänderung im Basisgerät aufgrund von Benutzereingaben betreff gestellter Dienstleistungsanforderungen an einen Beförderer und zur Verarbeitung der gelieferten Daten im Basisgerät,
- Empfangen von Gewichtsdaten und von Versanddaten für ein Poststück,
- Portowertberechnung aufgrund der Portotariftabellendaten und Berechnungsstruktur des gewünschten Beförderers im auswechselbaren Portorechnermodul und
- Liefern von den Portowert einschließenden Daten mindestens eines Beförderers vom auswechselbaren Portorechnermodul zum befördererbezogenen Verarbeiten der gelieferten Daten im Basisgerät.

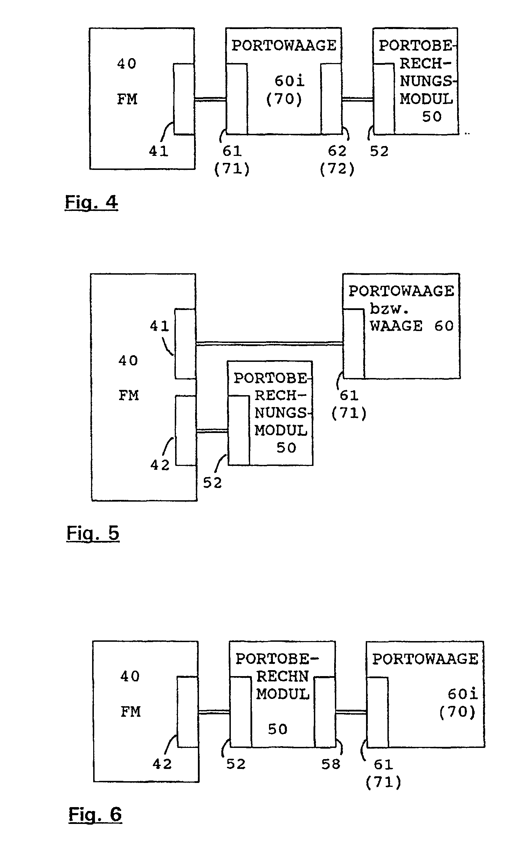

Die Figur 4 zeigt eine Schnittstellenverschaltung mit steckbaren Portogebühren- und Berechnungsmodul für eine Portowaage, die mit ihrer einen seriellen Schnittstelle 61 mit der einen seriellen Schnittstelle 41 der Frankiermaschine 40 verbunden ist. Eine bekannte intelligente Portowaage 60i ist bereits zum Portoberechnen für einen einzigen öffentlichen Postbeförderer (Postbehörde) vorgesehen. Unter dem Titel: Verfahren zur Dateneingabe in eine Waage, ist in einer nicht vorveröffentlichten europäischen Anmeldung 95250313.4 bereits eine Erweiterung auf einen Satz an Beförderern vorgeschlagen worden, wobei aus dem vorgenannten Satz der gewünschte Beförderer selektiert werden kann. Jedem Beförderer ist als Kennung eine Carrier-Identifikations-Number (CIN) zugeordnet. Das berechnete Porto und die CIN werden von der Portowaage zur Frankiermaschine übermittelt. Die Portowaage enthält einen elektrisch programmierbaren nichtflüchtigen Speicher für die Tariftabellendaten. Frankiermaschine und Portowaage werden für den gleichen Standort und den gleichen Satz an Beförderern initialisiert. Von der Portowaage werden Überprüfungsdaten zur Frankiermaschine übermittelt, zur Überprüfung in der Frankiermaschine, ob die Tariftabellendaten noch aktuell sind. Andernfalls kann eine automatische Aktualisierung durchgeführt werden.

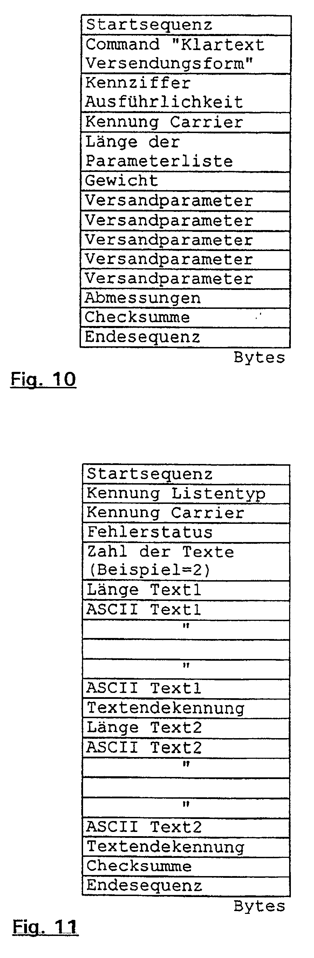

Eine erfindungsgemäß weiter entwickelte Portowaage 60i ist mit zwei seriellen Schnittstellen 61 und 62 und mit einem internen Prozessor ausgerüstet, welcher programmiert ist, die Gewichtsdaten einschließenden Daten an das auswechselbare Portorechnermodul 50 zur Portoberechnung zu übermitteln. Solche Daten sind insbesondere die über die Tastatur der intelligenten Portowaage 60i eingegebene Versendungsart, wie beispielsweise Brief, Päckchen, Drucksache, Warensendung, Büchersendung und andere und/oder die eingegebene Versendungsform, wie beispielsweise Expreß, Einschreiben, Rückschein, Luftpost und andere und/oder Daten zur Bestimmungszone, Inland, Ausland, Postleitzahl, ZIP TO ZONE und gegebenenfalls Poststückdicke, Poststückformat sowie Wahldrucke, wie beispielsweise Einschreiben und andere Daten. Eine solche intelligente Portowaage 60i weist auch eine entsprechende Anzeige auf. Beispielsweise können auch vom auswechselbaren Portorechnermodul 50 gelieferte Zeichen oder Texte angezeigt werden. Das auf die serielle Schnittstelle 62 der Portowaage 60i mit seiner seriellen Schnittstelle 52 gesteckte auswechselbare Portorechnermodul 50 ermöglicht unter Umständen eine Auswahl zwischen weiteren Versanddaten, welche beim einzigen öffentlichen Postbeförderer (Postbehörde) nicht vorgesehen sind. Der Prozessor der Portowaage 60i ist programmiert, den auswechselbaren Portorechnermodul nach solchen - wie dies anhand der Figur 10 noch erläutert wird - weiteren Versanddaten abzufragen, um diese nach Betätigung eines geeigneten Betätigungsmittels zur Anzeige zu bringen, beispielsweise um über die Tastatur der Portowaage eine Auswahl zu ermöglichen. Der errechnete Portowert wird dann über die Portowaage 60i zur Frankiermaschine 40 übermittelt. Eine solche Variante mit intelligenter Portowaage 60i dient zur vorzugsweise zur Erweiterung der Portoberechnung auf mindestens einen neuen Postbeförderer oder zur Anpassung an eine neue Berechnungsstruktur mittels des auswechselbaren Portorechnermoduls 50.

Nach einer Schnittstellenverschaltung gemäß Figur 5 kann ein steckbarer Portogebühren- und Berechnungsmodul auch auf eine freie Schnittstelle 42 einer Frankiermaschine gesteckt werden. In dieser ersten Variante wird eine Waage 60 auf eine zweite Schnittstelle der Frankiermaschine 40 gesteckt, um Gewichtsdaten zu übermitteln. Der Vorteil liegt in einer billigeren Waage 60 gegenüber einer Portowaage 60i, denn diese Waage 60 braucht intern nicht zur Portoberechnung und gegenbenenfalls nicht zur Eingabe und Anzeige von (allen) Versanddaten ausgebildet zu sein.

Es ist alternativ auch in einer - nicht gezeigten - Ausführungsvariante mit einer mechanischen Waage und - im Gegensatz zur Schaltung nach Figur 5 - ohne schnittstellenmäßigen Verbindung von der Waage zur Frankiermaschine vorgesehen, daß Gewichts- und Versanddaten von ein und dem selben Gerät, nämlich der Frankiermaschine an das auswechselbare Portorechnermodul 50 übermittelt werden. Die von der mechanischen Waage abgelesenen Gewichtswerte müssen dann über die Frankiermaschinentastatur manuell in die Frankiermaschine eingegeben werden.

Die Figur 6 zeigt einen, wie ein Dongle steckbar ausgebildeten, Portorechnermodul für eine Frankiermaschine, nach einer zweiten Variante, wobei die Frankiermaschine nicht über genügend freie Schnittstellen verfügt. Diese zweite Variante der Schnittstellenverschaltung für eine Frankiermaschine und für mindestens ein mit doppelter Schnittstelle 52 und 58 versehenes Portorechnermodul 50, ist zur Schnittstellenerweiterung vorteilhaft, wenn beispielsweise die Frankiermaschine 40 nur mit einer einzigen seriellen Schnittstelle 42 ausgerüstet ist. Es ist vorgesehen, daß das auswechselbare Portorechnermodul 50 mit seiner seriellen Schnittstelle 52 auf die serielle Schnittstelle 42 der Frankiermaschine 40 gesteckt ist. Das auswechselbare Portorechnermodul 50 weist erfindungsgemäß hier eine zweite Schnittstelle 58 vorzugsweise für die Portowaage 60i und eine entsprechende Adapterfunktion mit Protokollkonvertierung auf.

Die Anzeige der Versanddatenmöglichkeiten wird entweder über die Anzeigeeinheit der Waage oder der Frankiermaschine realisiert.

Für den Fall, daß die Portowaage 60i das Basisgerät bildet (Figur 4) werden die Versanddatenmöglichkeiten über die Anzeigeeinheit der Portowaage 60i angezeigt. Zur Anpassung an neue Portoberechnungsstrukturen oder andere Beförderer wird eine dem Waagetyp zugehörige modifizierte Bedienungsanleitung und eine neue zugehörige Waagetastaturfolie vom Hersteller geliefert. Statt der Waagetastaturfolie sind je nach Waagetyp auch einzelne Aufkleber für spezielle Funktionstasten der Waage vorgesehen. Waagetastaturfolie oder Aufkleber können entfallen, wenn die Tasten der Waagetastatur neutral gekennzeichnet sind, wobei die Kennzeichen in der Bedienungsanleitung aufgelistet und erklärt sind. Die Anpassung der Anzeige kann je nach Anzeigetyp auf verschiedene Art erfolgen.

Eine Anpassung der Benutzerschnittstelle wird ausgabeseitig grundsätzlich realisiert, durch:
a) Anzeigen von aufgelisteten oder von einzelnen Befehlscode in Verbindung mit erläuternden Klartexten in der zugehörigen Bedienungsanleitung, oder
b) Anzeigen von Texten, die aus dem auswechselbaren Portorechnermodul 50 geliefert werden (Datensatz in Fig. 11).

Die Variante a) ermöglicht auch bei einfachen Anzeigeeinheiten, wie beispielsweise einer zehnstelligen Siebensegmentanzeige eine Kommunikation mit dem Benutzer. Die über die zehnstelligen Siebensegmentanzeige angezeigten Zeichen werden als Befehlscode anhand der vorgenannten modifizierten Bedienungsanleitung vom Benutzer identifiziert und können mittels Tastenbetätigung gewechselt oder quittiert werden.

Ist aber die Frankiermaschine das Basisgerät, kann die Anzeige der Versanddatenmöglichkeiten über die Anzeigeeinheit der Frankiermaschine ebenso in vorgenannter Weise realisiert werden.

Eine Verbesserung der Benutzerschnittstelle wird mit einer zur Textdarstellung geeigneten alphanumerischen Anzeigeeinheit oder mit einem graphikfähigen Display erzielt. An eine vorhandene Menuestruktur anknüpfend kann ein spezieller vom auswechselbaren Portorechnermodul 50 gelieferter Menueteil dargestellt werden, wobei Datensätze über die Kommunikationsverbindung zwischen dem auswechselbaren Portorechnermodul und Frankiermaschine ausgetauscht werden, welche anhand der Figuren 10 und 11 näher erläutert werden. Der Prozessor der Frankiermaschine 40 ist programmiert, solche weiteren Versanddaten zur Anzeige zu bringen, um über die Tastatur der Frankiermaschine 40 eine Auswahl zu ermöglichen.

Die Auswahl an Versanddaten wird zum auswechselbaren Portorechnermodul 50 übermittelt. Der errechnete Portowert wird dann vom auswechselbaren Portorechnermodul 50 zur Frankiermaschine 40 übermittelt. Die Waage 60 liefert dabei nur noch die am Poststück gemessenen Gewichtsdaten.

Wenn die Portowaage 60i bzw. Waage 60 in den Figuren 4 bis 6 entfernt wird, ergeben sich weitere alternative Ausführungsvarianten. In einer solchen - in den Figuren 4 bis 6 nicht gezeigten - Ausführungsvariante ist auch vorgesehen, daß Gewichts- und Versanddaten von ein und dem selben Gerät an den auswechselbaren Portorechnermodul 50 übermittelt werden. So können beispielsweise Gewichtsdaten manuell eingegeben oder unter Umständen in einem Gerät, wie Personalcomputer 70 oder Frankiermaschine 40, errechnet werden, was dann die Portowaage 60i bzw. Waage 60 erübrigt. Zur Eingabe der Gewichtsdaten kann aber auch ein anderes peripheres Gerät vorgesehen sein.

Vorteilhaft kann eine automatisch arbeitende Frankiermaschine an einem Personalcomputer angeschlossen sein, über den sämtliche Eingaben vorgenommen werden. Zur Eingabe der Gewichtsdaten durch den Personalcomputer 70 werden die Gewichtsdaten anhand der Einlagenanzahl, des durchschnittlichen Einlagengewichtes, der Verpackungsart und des Verpackungsmaterialgewichtes berechnet. Ein geeignetes System, aber ohne den erfindungsgemäßen auswechselbaren Portoberechnungsmodul, ist unter dem Titel: Verfahren zur Ermittlung des günstigsten Beförderers und Postverarbeitungssystem mit Personalcomputer und mit einem Verfahren zur Datenverarbeitung, in der nicht vorveröffentlichten deutschen Anmeldung 196 17 557.7 näher erläutert worden.

In einer anderen vorteilhaften Variante ist die Frankiermaschine mit einer komfortablen Benutzerschnittstelle (Userinterface) für alle Eingaben und Anzeigen ausgestattet. Ein geeignetes System, aber ohne den erfindungsgemäßen auswechselbaren Portoberechnungsmodul, ist unter dem Titel: Verfahren und Anordnung zur Datenverarbeitung in einem Postverarbeitungssystem mit einer Frankiermaschine, in der nicht vorveröffentlichten deutschen Anmeldung 196 17 476.7 näher erläutert worden. Im letzterem Fall ergibt sich bei Anwendung der Erfindung, d.h. mit dem erfindungsgemäßen auswechselbaren Portoberechnungsmodul eine Schnittstellenverschaltung, wie das prinzipiell in der erfindungsgemäßen Schnittstellenverschaltung nach Figur 5 gezeigt worden ist, jedoch ohne die Portowaage. Statt der Waage ist ein entfernter Personalcomputer 70 an die serielle Schnittstelle angeschlossen.

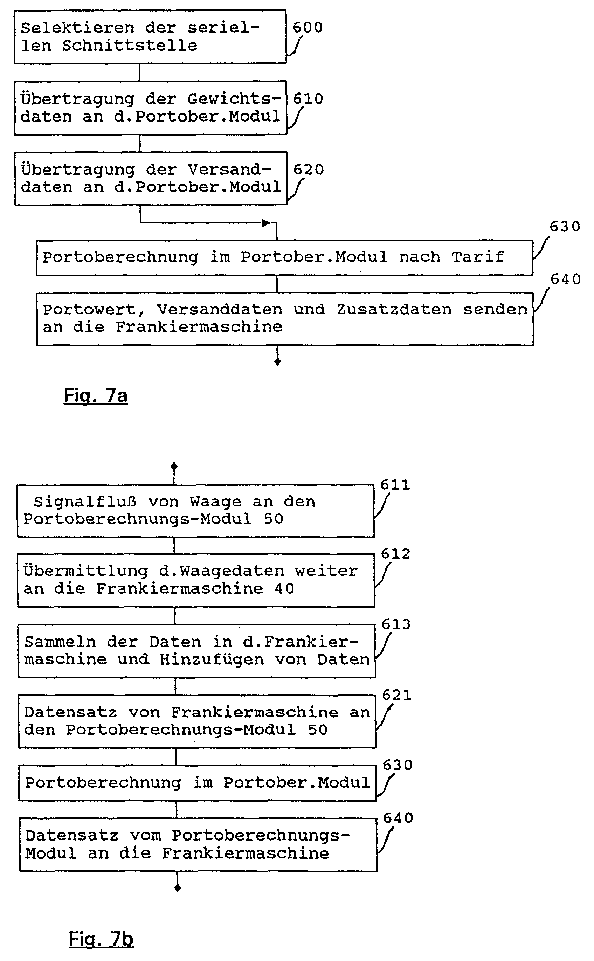

In der Figur 7a ist ein Flußdiagramm für den Datenaustausch eines steckbaren Portogebühren- und Berechnungsmoduls mit weiteren Geräten, vorzugsweise zur Ermittlung des Portowertes für eine Portowaage oder eine Frankiermaschine dargestellt. Es sind verschiedene miteinander in Wirkungsbeziehung stehende Geräte, wie Frankiermaschine 40, Waage 60 oder Personalcomputer 70 denkbar, welche folgende Schritte ausführen:
- Schritt 600, Selektieren der seriellen Schnittstelle zum auswechselbaren Portorechnermodul 50,
- Schritt 610, Übermittlung von Gewichtsdaten einschließenden Daten an den auswechselbaren Portorechnermodul 50, der einen Portogebühren- und Berechnungsmodul enthält und der an irgendeines der vorgenannte Geräte bzw. zwischen zwei der vorgenannten Geräte geschaltet ist,
- Schritt 620, Übermittlung der Versanddaten an den auswechselbaren Portorechnermodul 50, wobei die Versanddaten die Versandart und die Versandform einschließen und weitere Daten umfassen können,
- Schritt 630, Portoberechnung im auswechselbaren Portorechnermodul 50 nach aktuellem Tarif und
- Schritt 640, Senden von Portowert, Versanddaten und Zusatzdaten an die Frankiermaschine 40.

Die Anschaltung der unterschiedlichen Geräte 40, 60 und/oder 70 an den auswechselbaren Portorechnermodul 50 erfolgt grundsätzlich nach einer der in den Figuren 4, 5 oder 6 gezeigten Variante. Es ist in einer Ausführungsvariante ausgeführt, daß Gewichts- und Versanddaten von unterschiedlichen Geräten 40, 60 und/oder 70 an den auswechselbaren Portorechnermodul 50 übermittelt werden. Zum zweiten Schritt 620, der oben genannten Verfahrensschritte, sind dann entsprechende Subverfahrensschritte für die Übermittlung der Versanddaten von unterschiedlichen Geräten an das auswechselbare Portorechnermodul 50 vorzusehen.

Das anhand der Figur 7a erläuterte Flußdiagramm bildet einerseits eine Lösung für die - in der Figur 4 und 5 gezeigten - Varianten und andererseits ist dieses Flußdiagramm für ein auswechselbares Portorechnermodul auch eine erste Lösung zur - in der Figur 6 gezeigten - zweiten Variante für eine Frankiermaschine mit steckbarem Portogebühren- und Berechnungsmodul an einer seriellen Schnittstelle. So ist es möglich, daß die Waage 60 nur den Gewichtswert übermittelt und im auswechselbaren Portorechnermodul die Portoberechnung erfolgt. Die weiteren ausgewählten Versanddaten und die Kennung CIN des gewählten Postbeförderers werden durch die Frankiermaschine zum auswechselbaren Portorechnermodul übermittelt.

In der Figur 7b ist eine Subvariante eines Flußdiagramms für den Datenaustausch eines steckbaren Portogebühren- und Berechnungsmoduls dargestellt. Diese Subvariante trifft speziell auf die Schnittstellenverschaltung gemäß der in der Figur 6 gezeigten Variante zu. Es ist wieder ein Schritt 600 zum Selektieren der Schnittstelle vorgesehen, aber nicht gezeigt.

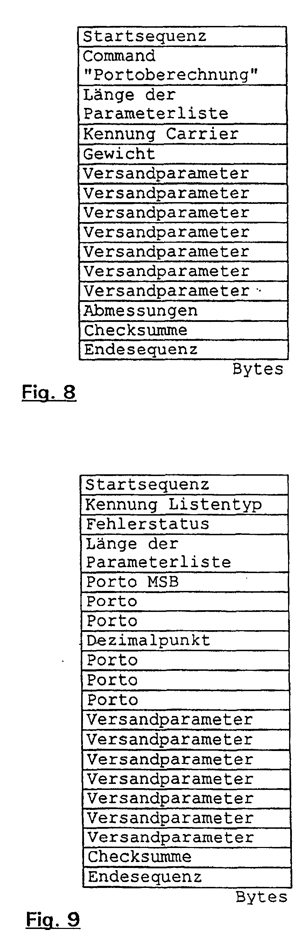

Im ersten Subschritt 611 liefert die Waage 60i das aktuelle Gewicht an das auswechselbare Portorechnermodul 50, analog zum oben erläuterten Schritt 610 zur Übermittlung der Gewichtsdaten an das auswechselbare Portorechnermodul 50. Nach diesem ersten Subschritt 611 mit einem Signalfluß von der Waage 60 zum auswechselbaren Portorechnermodul 50 wird bei Bedarf die Gewichtsinformation konvertiert und dann im zweiten Subschritt 612 an die Frankiermaschine übermittelt. Nach dieser Übermittlung der Gewichtsdaten an die Frankiermaschine erfolgt im dritten Subschritt 613 ein Sammeln der Daten in der Frankiermaschine. Die Frankiermaschine speichert die Gewichtsdaten zunächst zwischen bis der Benutzer die Versendungsart, -Form u.a. Daten, beispielsweise CIN eingegeben hat. Die Frankiermaschine stellt einen - in der Figur 8 gezeigten - Datensatz unter Hinzufügung von Versanddaten und weiterer Daten zusammen. Der zweite Schritt 620 ist derart zum Subschritt 621 spezifiziert, daß von der Frankiermaschine 40 an das auswechselbare Portorechnermodul 50 der vorgenannte Datensatz übertragen wird. Im dritten Schritt 630 erfolgt wieder die Portoberechnung durch den im auswechselbaren Portorechnermodul befindlichen Portogebühren- und Berechnungsmodul. Anschließend wird Schritt 640 durchgeführt, wobei vom auswechselbaren Portorechnermodul 50 ein Datensatz an die Frankiermaschine 40 übermittelt wird, welcher anhand der Figur 9 näher erläutert wird.

In der Figur 8 wird ein Datensatz für den Informationsfluß von der Frankiermaschine zum auswechselbaren Portorechner aufgezeigt, wie er beispielsweise im Schritt 621 übermittelt wird. Erfindungsgemäß wird im Datensatz eine Kennung CIN für den selektierten Postbeförderer übermittelt. Der Datensatz schließt mindestens das Poststückgewicht und selektierte Versandparameter ein. Die Zahl der Versandparameter ist variabel. Um diese Zahl mitzuteilen, wird vorab eine Information über die Länge der Parameterliste des Datensatzes übermittelt. Gegebenenfalls werden weitere Daten, wie beispielsweise Abmessungen des Poststückes übermittelt. Zum Gelingen der Übermittlung tragen weitere Datensatzbestandteile bei. Der Datensatz wird mit einer Startsequenz eröffnet und mit einer Endesequenz abgeschlossen. Zwecks Datensicherheit beinhaltet der Datensatz auch eine Überprüfungssumme (Checksumme) über wesentliche Daten des Datensatzes.

In der Figur 9 wird ein Datensatz für den Informationsfluß vom auswechselbaren Portorechner zur Frankier-maschine dargestellt. Erfindungsgemäß wird im Datensatz eine Kennung CIN für den selektierten Postbeförderer und eine Kennung für den Listentyp bzw. Typ des Portogebühren- und Berechnungsmoduls übermittelt. Der Datensatz schließt mindestens den ermittelten Portowert und gegebenenfalls die Stelle für den Dezimalpunkt ein. Der Datensatz wird mit einer Startsequenz eröffnet und mit einer Endesequenz abgeschlossen. Zwecks Datensicherheit beinhaltet der Datensatz wieder eine Überprüfungssumme (Checksumme) über wesentliche Daten des Datensatzes sowie eine Information über die Länge der Parameterliste des Datensatzes. Der Datensatz enthält als zusätzliches Datensatzbestandteil eine Information über den Fehlerstatus. Hier kann beispielsweise eine "0" keinen Fehler, aber "1" einen Fehler durch geänderte Versendungsform bedeuten. Der Fehler "2" wird angezeigt, wenn eine Berechnung nicht möglich ist. Ein durch eine falsch übermittelte CIN selektierter unbekannter Beförderer wird durch Fehler "10" mitgeteilt, usw.

In der Figur 10 wird ein zusätzlicher Datensatz für den Informationsfluß von der Frankiermaschine zum auswechselbaren Portorechner aufgezeigt, welcher zur Vorbereitung einer Selektion der CIN, von Versanddaten und anderen Daten abläuft. Erfindungsgemäß wird ein Befehl COMMAND "KLARTEXT VERSENDUNGSFORM" und ein Parameter KENNZIFFER AUSFÜHRLICHKEIT sowie eine Kennung CIN für den Beförderer "CARRIER" übermittelt. Die Kennziffer AUSFÜHRLICHKEIT ermöglicht es dem anforderndem Basisgerät (Portowaage, Frankiermaschine) einen seinem Anzeigemitteln angepaßten Datensatz (Zeichen oder Text) zu übermitteln. In einem Hilfsmodus können ausführliche Erläuterungen abgerufen werden. Erfindungsgemäß ist ein automatisches Anpassen an eine unterschiedliche Benutzerschnittstellen-Hardware für die unterschiedlichsten Basisgeräte vorgesehen.

Die Figur 11 zeigt einen zusätzlichen Datensatz für den Informationsfluß vom auswechselbaren Portorechner zur Frankiermaschine. Erfindungsgemäß werden Texte übermittelt, um eine Einstellung bzw. Darstellung von Versandparametern und/oder anderer beförderungsspezifischer Daten zu ermöglichen. Neben den bereits genannten Datensatzbestandteilen und der Kennung des Listentyps und der Kennung des Carriers werden folgende Informationen übermittelt:
- Zahl der Texte,
- Länge des Textes mit der Nummer 1
- ASCII-Zeichen für den Text zur Nummer 1
- Textendekennung,
- Länge des Textes mit der Nummer 2
- ASCII-Zeichen für den Text zur Nummer 2
- Textendekennung, usw.

Damit kann über die Anzeigeeinheit des Basisgerätes, beispielsweise der Frankiermaschine, auch eine Darstellung erfolgen, welches in dem Menue entsprechend richtig eingeordnet, eine Auswahl auch zwischen zusätzlichen Einstelldaten bzw. ergänzenden Parametern ermöglicht. Voraussetzung ist eine adaptierbare Baumstruktur der Menueverzweigungen eines flexiblen Userinterface, welche beispielsweise unter dem Titel: Verfahren und Anordnung zur Dateneingabe in eine Frankiermaschine, in der nicht vorveröffentlichten deutschen Anmeldung 195 49 305.2 vorgeschlagen wurde.

Die Kommunikation mit solchen in den Figuren 10 und 11 im Prinzip gezeigten Datensätzen kann mehrmals hintereinander erfolgen und ist immer dann vorteilhaft, wenn das Basisgerät über eine komfortable Benutzerschnittstelle mit einem zur Textdarstellung geeigneten mehrzeiligem bzw. graphikfähigem Display verfügt.

In einer vorteilhaften Ausführungsvariante kann vorgesehen sein, daß modifizierte befördererspezifische Druckbildteile im Speicher des auswechselbaren Portorechnermoduls nichtflüchtig zu speichern und bei Bedarf in die Frankiermaschine zu laden. Zur Manipulationssicherheit wird eine verschlüsselte Überprüfungssumme über die Daten der befördererspezifischen Druckbildteile vorgesehen. Am Frankierabdruck bzw. Druckbild kann dann beispielsweise in einer Postverteilstelle erkannt werden, mit welchem Beförderer das Poststück transportiert werden soll. Für eine solche Ausführungsvariante ist natürlich ein nichtmechanisches Druckverfahren für beliebig programmierbare Abdrucke besonders geeignet.

In einer weiteren Ausführungsvariante kann eine Frankiermaschine, welche eine serielle Schnittstelle und ein geeignetes Schnittstellenkommunikationsprogramm besitzt, nachträglich zur automatischen Portoberechnung für einen oder mehrere Beförderer aufgerüstet werden. Auch eine Basismaschine, welche in den nichtflüchtigen Speichern standardmäßig den länderspezifische Beförderer, insbesondere den öffentlichen Postbeförderer, wie beispielsweise die Deutsche Post AG geladen enthält, kann noch aufgerüstet werden. Zusätzliche Beförderer können nun bei Verwendung des erfindungsgemäß aufsteckbaren und austauschbaren auswechselbaren Portorechnermoduls zusätzlich selektiert werden, um das Poststück erfindungsgemäß wahlweise durch einen anderen Beförderer befördern zu lassen, wenn dies günstiger ist.

Als wesentlicher Vorteil ist das Fehlen jeglicher Beschränkung für die Portoberechnung bei gleichzeitiger Nachrüstbarkeit durch den Kunden anzusehen. Die Portoberechnung kann also auch dann durchgeführt werden, wenn sie nach völlig neuartigen oder anderen Gesichtspunkten durchgeführt wird, welche der Beförderer in der Zukunft festlegt.

Mit der zunehmenden Liberalisierung der Postzustellung werden für den Kunden Postverarbeitungssysteme interessant, mit denen es ihm möglich ist, zwischen den Angeboten verschiedener konkurrierender Beförderer das für ihn jeweils optimale auszuwählen. Das setzt voraus, daß die Datenzentrale bzw. Dienstleistungseinrichtung des Frankiermaschinenherstellers bzw. der Beförderer dem Kunden Informationen für diese Auswahl zur Verfügung stellen kann. Zur Abrechnung ist die Frankiermaschine mit dem selben Satz an gewünschten Beförderern ausgestattet, wie das auswechselbare Portoberechnungsmodul.

Einerseits erfolgt bei der Initialisierung des Basisgerätes bzw. der Frankiermaschine eine Vorauswahl einer Gruppe an Beförderern, wie diese im auswechselbaren Portoberechnungsmodul geladen ist und aus welcher der gewünschte Beförderer anschließend selektiert werden kann. Jedem Beförderer ist eine eindeutige Kennung CIN zugeordnet. Eine erfindungsgemäße Routine in der Frankiermaschine sorgt andererseits automatisch für eine Übereinstimmung mit weiteren aktuellen befördererbezogenen Daten, welche in der Basismaschine, beispielsweise der Frankiermaschine, zur CIN zugeordnet gespeichert sind. Solche zusätzlichen Daten erzeugen beispielsweise ein befördererspezifisches Druckbild und ermöglichen eine länderspezifische Abrechnung in der Frankiermaschine. Jede Nichtübereinstimmung wird als Fehlermeldung angezeigt.

In Weiterbildung der Erfindung wird eine automatische Aktualisierungroutine für gespeicherte Tariftabellendaten in der Frankiermaschine durchgeführt, wobei entsprechende Mittel vorgesehen sind, damit die Frankiermaschine bei Bedarf mit einer Datenzentrale in Kommunikationsverbindung treten kann. Gegebenenfalls werden Tariftabellendaten neu geladen und dann zum Portogebührenmodul im auswechselbaren Portorechnermodul 50 übermittelt. Der auswechselbare Portorechnermodul 50 wird in dieser Ausführungsform nur dann ausgetauscht, wenn mindestens einer aus dem Satz an Beförderern zukünftig nun einen Portowert nach einer anderen grundlegenden Berechnungsstruktur berechnen läßt.

Eine standortspezifische Initialisierung der Frankiermaschine erfolgt nach jedem Einschalten automatisch oder manuell. Letztere Eingabemöglichkeit besteht nach dem Einschalten in einem Subschritt zur Initialisierung, durch Eingabe der Postleitzahl PLZ in die Frankiermaschine.

Die Fähigkeit, einen Portowert für einen bestimmten Beförderer zu ermitteln, ist grundsätzlich vom Zweck einer Frankiermaschine bestimmt, Versendungsgut bzw. Poststücke für diesen einen ausgewählten Beförderer frei zu machen. Falls der entsprechende Tarif oder die gewünschte Dienstleistung im Portorechnermodul 50 nicht verfügbar ist, ist für einige der Beförderer eine automatische Portoermittlung nicht möglich. Wenn der entsprechende Tarif oder die gewünschte Dienstleistung im Portorechnermodul 50 nicht verfügbar ist, antwortet der Portorechnermodul 50 mit einer Fehlermeldung.

Weicht umgekehrt die gewünschte von Seiten des Portorechnermodul 50 mögliche Dienstleistung von der Bestimmung des Basisgerätes ab oder ist die Frankiermaschine für bestimmte Arten der Freimachung oder des Druckes auf ein Poststück nicht geeignet, kann dies ebenso festgestellt und angezeigt bzw. signalisiert werden, insbesondere in Reaktion auf eine entsprechende Eingabe durch ein Eingabemittel der Benutzerschnittstellen-Hardware (Tastatur).

Die Erfindung ist nicht auf die vorliegenden Ausführungsform beschränkt, da offensichtlich weitere andere Anordnungen bzw. Ausführungen des Verfahrens entwickelt bzw. eingesetzt werden können, die vom gleichen Grundgedanken der Erfindung ausgehend, von den anliegenden Ansprüchen umfaßt werden.

## Patentansprüche

1. Auswechselbares Portorechnermodul, das vom Kunden austauschbar auf oder in ein Basisgerät (40, 60i, 70) steckbar ausgebildet ist und eine interne Verarbeitungseinheit und einen nichtflüchtigen Speicher für ein Portoberechnungsprogramm und für Portotariftabellendaten aufweist, wobei das auswechselbare Portorechnermodul (50) programmiert ist, zum:
- Liefern von Daten mindestens eines Beförderers vom auswechselbaren Portorechnermodul (50) zur Anzeigeänderung im Basisgerät (40, 60i, 70) aufgrund von Benutzereingaben betreff gestellter Dienstleistungsanforderungen an einen Beförderer und zur Verarbeitung der gelieferten Daten im Basisgerät (40, 60i, 70),
- Empfangen von Gewichtsdaten und von Versanddaten für ein Poststück,
- Portowertberechnung aufgrund der Portotariftabellendaten und einer Berechnungsstruktur des gewünschten Beförderers im auswechselbaren Portorechnermodul (50) und
- Liefern von den Portowert einschließenden Daten mindestens eines Beförderers vom auswechselbaren Portorechnermodul (50) zum Verarbeiten der gelieferten Daten im Basisgerät (40, 60i, 70).

2. Auswechselbares Portorechnermodul, nach Anspruch 1, **dadurch gekennzeichnet, daß** das auswechselbare Portorechnermodul (50) mindestens eine serielle Schnittstelle (52, 58) aufweist, daß verschiedene miteinander in Wirkungsbeziehung stehende Geräte, wie Frankiermaschine (40), Waage (60) oder Personalcomputer (70) schnittstellenmäßig verschaltet sind und daß das auswechselbare Portorechnermodul (50), der den Portogebühren- und Berechnungsmodul enthält, an irgendeines der vorgenannte Geräte geschaltet ist, welches als Basisgerät fungiert.

3. Auswechselbares Portorechnermodul, nach den Ansprüchen 1 und 2, **dadurch gekennzeichnet, daß** das auswechselbare Portorechnermodul(50) mit seiner seriellen Schnittstelle (52) auf die serielle Schnittstelle (62) der Portowaage (60i) gesteckt ist.

4. Auswechselbares Portorechnermodul, nach den Ansprüchen 1 und 2, **dadurch gekennzeichnet, daß** das auswechselbare Portorechnermodul (50) mit seiner seriellen Schnittstelle (52) auf die serielle Schnittstelle (42) der Frankiermaschine (40) gesteckt ist.

5. Auswechselbares Portorechnermodul, nach den Ansprüchen 1 und 2, **dadurch gekennzeichnet, daß** das auswechselbare Portorechnermodul (50) eine zweite serielle Schnittstelle (58) aufweist und schnittstellenmäßig zwischen zwei der vorgenannten Geräte (40 und 60 bzw. 60i oder 70) geschaltet ist.

6. Auswechselbares Portorechnermodul, nach einem der Ansprüche 1 bis 5, **dadurch gekennzeichnet, daß** das auswechselbare Portorechnermodul (50) eine entsprechende Adapterfunktion mit Protokollkonvertierung aufweist.

7. Auswechselbares Portorechnermodul, nach einem der Ansprüche 1 bis 6, **dadurch gekennzeichnet, daß** das auswechselbare Portorechnermodul (50) mit einem Single-Chip-Rechner (53) auf einer Platine (56) ausgerüstet ist, welcher mit der seriellen Schnittstelle (52) verbunden ist.

8. Auswechselbares Portorechnermodul, nach Anspruch 7, **dadurch gekennzeichnet, daß** der Portorechner des auswechselbaren Portorechnermoduls(50) nachbaugeschützt als OTP-Prozessor, d.h. ONE TIME PROGRAMMABLE Prozessor, ausgebildet ist, der einen internen flüchtigen Arbeitsspeicher iRAM und interne nichtflüchtige Speicher iROM bzw. iEPROM und/oder E²PROM aufweist.

9. Auswechselbares Portorechnermodul, nach einem der Ansprüche 1 bis 5, **dadurch gekennzeichnet, daß** das auswechselbare Portorechnermodul (50) mit einer Verarbeitungseinheit CPU (54), einem nichtflüchtigem Speicher (57) und einem Zusatzbaustein (55) ausgerüstet ist, wobei der Zusatzbaustein (55) einen Takterzeugerbaustein einschließen und gegebenenfalls weitere Baugruppen umfassen, die zum Betrieb der seriellen Schnittstelle erforderlich sind.

10. Verfahren zur Datenübertragung zwischen Portorechnermodul (50) und einem Basisgerät (40, 60i, 70), bestehend aus den aufeinanderfolgenden Schritten:
- Schritt (600), Selektieren einer seriellen Schnittstelle zum auswechselbaren Portorechnermodul (50),
- Schritt (610), Übermittlung von Gewichtsdaten einschließenden Daten für ein Poststück und Empfangen von Gewichtsdaten im auswechselbaren Portorechnermodul (50), der einen Portogebühren- und Berechnungsmodul enthält und der an irgendeines der vorgenannten Basisgeräte (40, 60i, 70) bzw. zwischen zwei der vorgenannten Basisgeräte 40, 60i, 70) geschaltet ist,
- Schritt (620), Übermittlung der Versanddaten an das auswechselbare Portorechnermodul (50), wobei die Versanddaten die Versandart und die Versandform einschließen und weitere Daten umfassen können,
- Schritt (630), Portowertberechnung im auswechselbaren Portorechnermodul (50) nach aktuellem Tarif aufgrund der Portotariftabellendaten und Berechnungsstruktur des gewünschten Beförderers im auswechselbaren Portorechnermodul und
- Schritt (640), Senden von Portowert, Versanddaten und Zusatzdaten an eines der vorgenannten Basisgeräte (40, 60i oder 70).

11. Verfahren, nach Anspruch 10, **dadurch gekennzeichnet, daß** dem Schritt (620) zur Übermittlung der Versanddaten ein Liefern von Daten mindestens eines Beförderers vom auswechselbaren Portorechnermodul (50) zur Anzeigeänderung im Basisgerät vorausgeht.

12. Verfahren, nach den Ansprüchen 10 und 11, **dadurch gekennzeichnet, daß** in Folge von Eingaben betreff gestellter Dienstleistungsanforderungen an einen Beförderer und/oder zur Verarbeitung der gelieferten Daten im Basisgerät der Schritt (620) zur Übermittlung der Versanddaten an das auswechselbare Portorechnermodul (50) ausgelöst wird.

13. Verfahren, nach den Ansprüchen 10 bis 12, **dadurch gekennzeichnet, daß** das Senden im Schritt (640) mit einem Liefern von den Portowert einschließenden Daten mindestens eines Beförderers vom auswechselbaren Portorechnermodul zum befördererbezogenen Verarbeiten der gelieferten Daten im Basisgerät verbunden ist.

## Claims

1. An exchangeable postage calculator module that can be exchanged by the customer or plugged into a basis unit (40, 60i, 70) and includes an internal processing unit and a non-volatile memory for a postage calculation program and for postage rates table data, said exchangeable postage calculator module (50) being programmed for:
- supplying data of at least one forwarder from the exchangeable postage calculator module (50) to the display change in the basis unit (40, 60i, 70) due to user entries made with regard to service requirements on a forwarder and for processing the supplied data in the basis unit (40, 60i, 70);
- receiving weight data and shipping data for a postal item;
- calculating the postage vale on the basis of the postage rates table data and a calculation structure of the desired forwarder in the exchangeable postage calculator module (50); and
- supplying of data including the postage value of at least one forwarder from the exchangeable postage calculator module (50) for the processing of the supplied data in the basis unit (40, 60i, 70).

2. An exchangeable postage calculator module according to Claim 1, **characterised in that** the exchangeable postage calculator module (50) has at least one serial interface (52, 58); that several devices that are action-related with one another, such as a franking machine (40), scales (60) or a personal computer (70), are connected via interface; and that the exchangeable postage calculator module (50) containing the postage rates and calculation module is connected to any one of above-mentioned devices acting a basis unit.

3. An exchangeable postage calculator module according to Claims 1 and 2, **characterised in that** the exchangeable postage calculator module (50) is plugged with its serial interface (52) into the serial interface (62) of the postage scales (60i).

4. An exchangeable postage calculator module according to Claims 1 and 2, **characterised in that** the exchangeable postage calculator module (50) is plugged with it serial interface (52) into the serial interface (42) of the franking machine (40).

5. An exchangeable postage calculator module according to Claims 1 and 2, **characterised in that** the exchangeable postage calculator module (50) has a second serial interface (58) and is connected via interface between two of the above-mentioned devices (40 and 60 or 60i or 70).

6. An exchangeable postage calculator module according to one of the Claims 1 to 5, **characterised in that** the exchangeable postage calculator module (50) has a respective adapter function with protocol conversion.

7. An exchangeable postage calculator module according to one of the Claims 1 to 6, **characterised in that** the exchangeable postage calculator module (50) is equipped with a single-chip computer (53) on a board (56) that is connected with the serial interface (52).

8. An exchangeable postage calculator module according to Claim 7, **characterised i**n that the postage calculator of the exchangeable postage calculator module (50) is designed in a copy-protected manner as an OTP processor, i.e. a ONE-TIME PROGRAMMABLE processor, having an internal volatile working memory iRAM and internal non-volatile memory iROM or iEROM and/or E²PROM.

9. An exchangeable postage calculator module according to one of the Claims 1 to 5, **characterised in that** the exchangeable postage calculator module (50) is equipped with a processing unit CPU (54), a non-volatile memory (57) and an additional component (55), wherein said additional component (55) can include a timing generation module and comprise further components required for the operation of the serial interface.

10. A method for the data transmission between a postage calculator module (50) and a basis unit (40, 60i, 70), comprising the following subsequent steps:
- Step (600), selection of a serial interface with the exchangeable postage calculator module (50);
- Step (610), transmission of data for a postal item including weight data and receipt of weight data by the exchangeable postage calculator module (50) that includes a postage rates and calculation module and is connected to any one of the above-mentioned basis units (40, 60i, 70) or between two of the above-mentioned basis units (40, 60i, 70);
- Step (620), transmission of the shipping data to the exchangeable postage calculator module (50), wherein said shipping data comprise the kind of shipping and the form of shipping and can include further data;
- Step (630), calculation of the postage value in the exchangeable postage calculator module (50) according to the current rate based on the postage rates table data and the calculation structure of the desired forwarder in the exchangeable postage calculator module; and
- Step (640), transmission of postage value, shipping data and additional data to one of the above-mentioned basis units (40, 60i, 70).

11. A method according to claim 10, **characterised in that** step (620) for the transmission of the shipping data is preceded by the supply of data of at least one forwarder from the exchangeable postage calculator module (50) to the display change in the basis unit.

12. A method according to claims 10 and 11, **characterised in that**, as a consequence of entries made in the basis unit with regard to service requirements on the forwarder and/or for the processing of the supplied data, there is triggered step (620) for the transmission of the shipping data to the exchangeable postage calculator module (50).

13. A method according to claims 10 to 12, **characterised in that** the transmission in step (640) is connected with a supply of data of at least one forwarder including the postage value from the exchangeable postage calculator module for a forwarder-related processing of the supplied data in the basis unit.

## Revendications

1. Module de calculateur d'affranchissement interchangeable qui est conçu d'une manière échangeable ou enfichable par le client dans un appareil de base (40, 60i, 70) et présente une unité de traitement interne et une mémoire non volatile pour un programme de calcul d'affranchissement et pour des données de tableau de barème d'affranchissement, le module de calculateur d'affranchissement (50) interchangeable étant programmé pour:
- fournir des données d'au moins un convoyeur à partir du module de calculateur d'affranchissement (50) interchangeable pour modifier l'affichage dans l'appareil de base (40, 60i, 70) sur la base d'entrées d'utilisateur concernant des demandes de prestations de service posées à un convoyeur et traiter des données fournies dans l'appareil de base (40, 60i, 70),
- recevoir des données de poids et des données d'expédition pour un colis postal,
- calculer la valeur d'affranchissement sur la base des données du tableau de barème d'affranchissement et d'une structure de calcul du convoyeur désiré dans le module de calculateur d'affranchissement (50) interchangeable et
- fournir les données comprenant la valeur d'affranchissement d'au moins un convoyeur à partir du module de calculateur d'affranchissement (50) interchangeable pour traiter des données fournies dans l'appareil de base (40, 60i, 70).

2. Module de calculateur d'affranchissement interchangeable, selon la revendication 1, **caractérisé en ce que** le module de calculateur d'affranchissement (50) interchangeable présente au moins une interface sérielle (52, 58), **en ce que** différents appareils agissant les uns avec les autres, comme la machine d'affranchissement (40), la balance (60) ou le micro-ordinateur (70), sont connectés via interface et **en ce que** le module de calculateur d'affranchissement (50) interchangeable, qui contient le module de calcul et de taxes d'affranchissement, est connecté sur n'importe lequel des appareils susnommés, lequel fait office d'appareil de base.

3. Module de calculateur d'affranchissement interchangeable, selon la revendication 1 et 2, **caractérisé en ce que** le module de calculateur d'affranchissement (50) interchangeable est enfiché avec son interface sérielle (52) sur l'interface sérielle (62) de la balance d'affranchissement (60i).

4. Module de calculateur d'affranchissement interchangeable, selon la revendication 1 et 2, **caractérisé en ce que** le module de calculateur d'affranchissement (50) interchangeable est enfiché avec son interface sérielle (52) sur l'interface sérielle (42) de la machine d'affranchissement (40).

5. Module de calculateur d'affranchissement interchangeable, selon la revendication 1 et 2, **caractérisé en ce que** le module de calculateur d'affranchissement (50) interchangeable présente une deuxième interface sérielle (58) et est connecté via interface entre deux des appareils susnommés (40 et 60 ou 60i ou 70).

6. Module de calculateur d'affranchissement interchangeable, selon la revendication 1 à 5, **caractérisé en ce que** le module de calculateur d'affranchissement (50) interchangeable présente une fonction d'adaptateur correspondant avec conversion de protocole.

7. Module de calculateur d'affranchissement interchangeable, selon la revendication 1 à 6, **caractérisé en ce que** le module de calculateur d'affranchissement (50) interchangeable est équipé d'un calculateur sur une puce (53) sur une platine (56), lequel est relié avec l'interface (52).

8. Module de calculateur d'affranchissement interchangeable, selon la revendication 7, **caractérisé en ce que** le module de calculateur d'affranchissement (50) interchangeable est conçu protégé contre la copie sous forme de processeur OTP; à savoir comme processeur à programmation unique, qui présente une mémoire de travail volatile interne iROM ou une mémoire non-volatile interne iEPROM et/ou E²PROM.

9. Module de calculateur d'affranchissement interchangeable, selon la revendication 1 à 5, **caractérisé en ce que** le module de calculateur d'affranchissement (50) interchangeable est équipé d'une unité de traitement CPU (54), d'une mémoire non-volatile (57) et d'un module supplémentaire (55), le module supplémentaire (55) intégrant un module générateur d'horloge et comprenant éventuellement d'autres modules qui sont nécessaires pour l'exploitation de l'interface sérielle.

10. Procédé destiné à la transmission de données entre le module de calculateur d'affranchissement (50) et un appareil de base (40, 60i, 70) composé des étapes successives:
- étape (600), sélection d'une interface sérielle vers le module de calculateur d'affranchissement (50) interchangeable,
- étape (610), transmission des données de poids, y compris les données pour un colis et réception de données de poids dans le module de calculateur d'affranchissement (50) interchangeable qui contient un module de calcul et de taxes d'affranchissement et qui est connecté sur n'importe lequel des appareils de base susnommés (40, 60i, 70) ou entre deux des appareils de base susnommés (40, 60i, 70),
- étape (620), transmission des données d'expédition au module de calculateur d'affranchissement (50) interchangeable, les données d'expédition intégrant le type d'expédition et la forme d'expédition et pouvant comprendre d'autres données,
- étape (630), calcul de la valeur d'affranchissement dans le module de calculateur d'affranchissement (50) interchangeable selon le tarif actuel sur la base des données du barème d'affranchissement et de la structure de calcul du convoyeur désiré dans le module de calculateur d'affranchissement interchangeable et
- étape (640), envoi de la valeur d'affranchissement, données d'expédition et données supplémentaires à un des appareils de base susnommés (40, 60i ou 70).

11. Procédé selon la revendication 10, **caractérisé en ce que** l'étape (620) destinée à la transmission des données d'expédition est précédée d'une livraison de données d'au moins un convoyeur à partir du module de calculateur d'affranchissement (50) interchangeable pour modifier l'affichage dans l'appareil de base.

12. Procédé selon la revendication 10 et 11, **caractérisé en ce que** l'étape (620) destinée à la transmission de données d'expédition au module de calculateur d'affranchissement (50) interchangeable est déclenchée consécutivement à des entrées concernant des demandes de prestations de service posées à un convoyeur et/ou pour traiter des données fournies dans l'appareil de base.

13. Procédé selon la revendication 10 à 12, **caractérisé en ce que** l'envoi dans l'étape (640) est lié à une livraison de données comprenant la valeur d'affranchissement d'au moins un convoyeur à partir du module de calculateur d'affranchissement interchangeable pour le traitement des données fournies, se référant au convoyeur, dans l'appareil de base.
